# EUROPEAN PATENT APPLICATION

(11) **EP 4 489 115 A1**
(43) Date of publication of application: **08.01.2025**
(21) Application number: 23899431.3
(22) Date of filing: 25.07.2023
(51) Int. Cl.: H01M 4/36

(54) **HIGH-VOLTAGE LOW-COBALT TERNARY POSITIVE ELECTRODE MATERIAL, PREPARATION METHOD THEREFOR, AND USE THEREOF**

(30) Priority: 09.12.2022 CN 202211580360
(71) Applicant: Wanhua Chemical Group Co., Ltd., Yantai, Shandong 264006 (CN)
(72) Inventor: LIU, Yiqun, Yantai, Shandong 264006 (CN); ZHANG, Jie, Yantai, Shandong 264006 (CN); WANG, Shuaigang, Yantai, Shandong 264006 (CN); DONG, Lintao, Yantai, Shandong 264006 (CN); AN, Xiaokun, Yantai, Shandong 264006 (CN); LI, Xinyu, Yantai, Shandong 264006 (CN); SUN, Jiakuan, Yantai, Shandong 264006 (CN)
(74) Representative: J A Kemp LLP
(86) International application number: PCT/CN2023/109095
(87) International publication number: WO 2024/119846

(57) **Abstract**

The present invention provides a high-voltage low-cobalt ternary positive electrode material. The positive electrode material has a general formula LiₐNi_{b}Co_{c}Mn_{d}O₂, wherein 0.97 ≤ a ≤ 1.1, 0.5 ≤ b ≤ 0.76, 0 ≤ c ≤ 0.1, 0.24 ≤ d ≤ 0.5, b+c+d=1, and c < 0.35d. Compared with the prior art, the positive electrode material can be used at a higher voltage compared to other ternary positive electrode materials which have the same nickel content as the positive electrode material, such that the energy density is increased, and because the positive electrode material has a smaller change in size, the cracking and powdering of the positive electrode material are avoided, the service life of the material is prolonged, and the safety performance of the material is improved. Additionally, the positive electrode material has relatively lower content of nickel and cobalt and relatively higher content of manganese, such that the positive electrode material has more excellent cycle performance and high voltage performance, and the use costs of the positive electrode material are reduced.

## Description

### FIELD OF THE INVENTION

The present application relates to the field of cathode materials for lithium-ion batteries, and particularly relates to a high-voltage low-cobalt ternary cathode material, a preparation method therefor, and a use thereof.

### BACKGROUND OF THE INVENTION

As a mainstream energy storage medium in the world currently, lithium-ion batteries have been increasingly applied since they were invented in the 1990s. At present, both in power lithium-ion batteries and non-power lithium-ion batteries, nickel-cobalt-manganese ternary cathode materials occupy an important position in the market of cathode materials due to their good cycling performance, higher capacity and higher voltage.

For nickel-cobalt-manganese ternary cathode materials, as described in ACS Energy Lett. 2017, 2, 196-223, it is generally believed that the role of nickel is to improve the capacity of the material. However, if the nickel content is high, i.e., high-nickel ternary cathode materials, it will lead to lithium-nickel disordering, which will result in lithium precipitation. The role of cobalt is to stabilize the material's layered structure, and to reduce lithium-nickel disordering, moreover, it can improve the material's stability in the long-cycle process. The role of manganese is to reduce the cost of the material, and to improve the safety and structural stability of the material.

In order to further improve the energy density of batteries and thus enhance the operation mileage of electric vehicles, various major power battery manufacturers are gradually moving towards two development directions, high capacity and high voltage.

One of the main ways to achieve high capacity is to improve the nickel content of ternary cathode materials. It is generally recognized that the ratio of the molar amount of nickel to the molar amount of lithium is higher than 0.8 for high-nickel materials, and now it is also developing towards the direction of ultra-high-nickel (the ratio of more than 0.9). However, the cycling performance and safety performance of high-nickel material batteries are also receiving more and more attention.

The most main reason affecting the cycling performance of high nickel ternary cathode materials is the cracking and pulverization of high nickel ternary cathode materials. Many scientists have conducted detailed studies on the causes of pulverization of high-nickel ternary cathode materials. At present, the relatively consistent view in the industry is that, under the commonly used 4.3V cut-off voltage, high nickel materials can get higher capacity compared with low nickel materials, but high nickel materials cause irreversible phase transition due to excessive delithiation, which leads to more intense volume contraction, resulting in cracks inside the primary particles and among the particles. The cracks gradually become larger under constant cycling and are eroded by the electrolyte solution, accompanied by the release of reactive oxygen, resulting in bad results such as electrolyte depletion, oxidation of the electrolyte solution, continuous formation of new cathode solid electrolyte layer (CEI), and gas production (ACS Energy Lett., 2017, 2, 1150; J. Electrochem. Soc., 2019, 166, A429; ACS Appl. Mater. Interfaces, 2020, 12, 10240), and resulting in decreased cycling performance and deterioration of safety performance.

Among the high-voltage ternary cathode materials, the currently commercially available materials include NCM 523, NCM 622, etc., in which the cobalt content ratio is higher than 0.1. Unlike lithium iron phosphate, the capacity of the ternary cathode material has a relationship of positive correlation with the cut-off voltage. For example, when the cut-off voltage of NCM 523 material is 4.2 V, it can only exert a capacity of 162 mAh/g, but when the voltage is raised to 4.4 V, its capacity can reach 175 mAh/g. Such a relationship of positive correlation between capacity and voltage is determined by the electronic energy level structure of nickel, cobalt and manganese elements in ternary cathode materials. In brief, the higher charging voltage applied to the cathode material can force more d-orbital electrons in the lower energy levels on nickel and cobalt to be deintercalated and transferred to the negative electrode through the external circuit, at the same time, more lithium ions are deintercalated from the inside of the cathode material and transferred to the negative electrode through the electrolyte solution. However, as the voltage increases, more lithium ions are deintercalated, which can lead to problems similar to those of high-nickel materials: volume shrinkage, collapse of the crystal layered structure, consequent cracking and pulverization of the material, and deterioration of the cycling performance.

In ternary cathode materials, cobalt has always been considered to be very important for the cycling stability of the material. For example, in J. Electrochem. Soc., 1999, 146, 3571, it is observed that the cycling stability of lithium nickel oxide becomes better and better with the increase of Co content. Due to the relatively high price of cobalt, both the scientific and industrial communities are trying to reduce the cobalt content as much as possible, even to zero so as to develop cobalt-free materials, but it is still generally acknowledged that cobalt has an indispensable role in maintaining the stability of the materials during long cycling, e.g., ACS Energy Lett., 2020, 5, 1814-1824 and CN113764653A, etc., and this point is even more important under high voltage conditions. In order to solve the problem of the cycling stability of low-cobalt or even cobalt-free materials, the structural stability or interfacial stability of the material is enhanced by optimizing the selection of coating agents (e.g., CN111276691A, CN114808127A, CN114853088A, CN114843472A), doping with multiple elements (e.g., CN112993239A, CN114759183A, CN114709378A), using other elements such as Al/W/Ti/Mg/Fe to replace Co (e.g., CN113800574A, CN111816877A), and other methods. However, these methods all require the introduction of new elements, making the process more complex, and the small amount of other elements doped cannot fully compensate for the lack of cycling stability due to the lack of cobalt, because it does not solve the fundamental problem of the collapse of the layered structure caused by excessive delithiation due to the increase in voltage. Recently, Tesla's chief scientist Jeff Dahn proposed a new solution in his article "Li[Ni_{0.5}Mn_{0.3}Co_{0.2}]O₂ as a Superior Alternative to LiFePO₄ for Long-Lived Low Voltage Li-Ion Cells", and deemed that it can improve the cycling stability of ternary cathode materials. The solution performs cycling only below 3.65 V or 3.8 V on the cell with NCM 523 cathode material, and the cell can be cycled at 20 °C for more than 100 years. However, the charging and discharging voltage of this solution is too low, and the NCM 523 material can only exert a capacity of less than 110 mAh/g at 3.8 V, which is not conducive to improving the energy density.

In the application of ternary cathode materials, lithium-nickel disordering has always been considered harmful to the cycling (Nat. Comm. 2014, 5, 3529; Chem. Mater. 2007, 19, 1790). In recently disclosed patents such as CN113584590A, CN113809320A, CN113707874A, CN104409700A, etc., all of them believe that it is necessary to reduce the degree of lithium-nickel disordering of the cathode material by certain means, such as doping with different elements, and by special steps, such as segmented lithium replenishment sintering.

Therefore, it has become a challenge to reduce the cobalt content to lower the cost while maintaining the high energy density of the ternary cathode material and at the same time maintaining high cycling stability.

### SUMMARY OF THE INVENTION

The inventor has found that, unlike conventional knowledge, in a ternary cathode material, by controlling the content of nickel, reducing the content of cobalt, and increasing the content of manganese to a certain extent, regulating the electronic energy level structure of the low-cobalt ternary cathode material in order to enhance its operating voltage, limiting the amount of lithium ions deintercalated at high voltage, and preventing the structural collapse caused by excessive delithiation, it can make this low-cobalt cathode material exert a higher capacity at a high voltage, thereby obtaining a high energy density while maintaining excellent cycling stability. Further, regulating the lithium-nickel disordering to a certain degree (rather than the lower the better) can play a role in maintaining the integrity and stability of the layered structure under the condition that the nickel in the lithium layer is cycled at a high voltage, and compared with the cobalt-rich cathode material comprising the same nickel content, the cycling stability of the low cobalt cathode material at a high voltage is further improved.

Therefore, in view of the deficiencies of the prior art, it is an object of the present application to provide a high-voltage low-cobalt ternary cathode material, which has excellent cycling performance and high-voltage performance as compared with other ternary cathode materials containing the same nickel content.

In order to achieve the above object, the present application provides a high-voltage low-cobalt ternary cathode material, wherein the high-voltage low-cobalt ternary cathode material has a general formula LiₐNi_{b}Co_{c}Mn_{d}O₂, wherein 0.97 ≤ a ≤ 1.1, 0.5 ≤ b ≤ 0.76, 0 ≤ c ≤ 0.1, 0.24 ≤ d ≤ 0.5, b+c+d=1, and c < 0.35d.

According to the high-voltage low-cobalt ternary cathode material of the present application, the high-voltage low-cobalt ternary cathode material has a lithium-nickel disordering ratio (σ), 2 ≤ σ ≤ 7. The lithium-nickel disordering ratio is defined as the molar percentage of lithium content in the nickel layer to the total lithium content.

According to the high-voltage low-cobalt ternary cathode material of the present application, in terms of capacity, the high-voltage low-cobalt ternary cathode material has a 0.1 C capacity of no more than 185 mAh/g at an operating voltage ranging from 3V to 4.3 V, and a 0.1 C capacity of no more than 210 mAh/g at an operating voltage ranging from 3 V to 4.5 V

According to the high-voltage low-cobalt ternary cathode material of the present application, wherein the high-voltage low-cobalt ternary cathode material is used at an operating voltage greater than or equal to 4.3 V, preferably at an operating voltage greater than or equal to 4.35 V, and more preferably at an operating voltage greater than or equal to 4.40 V

According to the high-voltage low-cobalt ternary cathode material of the present application, the cathode material has a lower cobalt content and a higher manganese content than conventionally used ternary cathode materials with the same nickel content, and the cobalt content of the cathode material of the present application is less than 0.35 times the manganese content, and the lithium-nickel disordering ratio of the cathode material of the present application is between 2 and 7. On the one hand, when the nickel, cobalt, manganese contents of the cathode material fall into the above range, the d-orbital electron energy of the nickel and cobalt elements thereof moves toward a lower energy level, which makes the difference between the d-orbital electron energy level of the nickel and cobalt elements thereof and the p-orbital electron energy level of lithium greater, and therefore enhances the charging/discharging voltage, and enhances the energy density by enhancing the charging/discharging voltage of the cathode material. The cathode material is suitable for a charging/discharging voltage of up to 4.5 V At a charging/discharging voltage of not higher than 4.5 V, the cathode material has a smaller volume change, which prevents cracking or pulverization inside the primary particles as well as among the primary particles, prolongs the service life of the cathode material, and improves the safety performance of the material. On the other hand, compared with a cobalt-rich ternary cathode material with the same nickel content but a cobalt content of more than 0.1, when nickel, cobalt, manganese contents of the cathode material falls into the above range of the present application, the high-voltage low-cobalt ternary cathode material of the present application limits the amount of lithium ions that can be deintercalated therein at a given voltage, so as to enable the low-cobalt ternary cathode material to exert an appropriately high capacity, and prevent the degradation of the cycling performance caused by the collapse of the layered structure of the cathode material due to excessive delithiation.

Another object of the present application is to provide a method for preparing the high-voltage low-cobalt ternary cathode material as described above, comprising the following steps:
step 1: dissolving NiSO₄·6H₂O, MnSO₄·H₂O and CoSO₄·7H₂O in deionized water to obtain a salt solution;
step 2: adding deionized water into a reaction vessel, and adding a concentrated ammonia water into the deionized water to formulate a base solution containing ammonia water; adding the salt solution obtained in step 1, as well as a sodium hydroxide solution and the concentrated ammonia water into the base solution dropwise at the same time, respectively; wherein the reaction vessel is provided with an overflow port, and with the dropwise addition of the salt solution, the sodium hydroxide solution, and the concentrated ammonia water, an overflow is maintained continuously until a particle size D₅₀ of particles of the reaction mixture in the reaction vessel reaches a target particle size;
step 3: removing all the reaction mixture in the reaction vessel obtained in step 2, carrying out solid-liquid separation, washing with deionized water, and drying to obtain a nickel-cobalt-manganese hydroxide precursor;
step 4: mixing the nickel-cobalt-manganese hydroxide precursor with LiOH·H₂O or lithium carbonate evenly to obtain a mixture; and
step 5: sintering the mixture obtained in step 4 under an oxygen atmosphere to obtain the high-voltage low-cobalt ternary cathode material.

According to the method for preparing the high-voltage low-cobalt ternary cathode material of the present application, in step 2, a dropwise addition speed of the salt solution is controlled to be in a range from 300 mL/h to 500 mL/h, for example, 300 mL/h, 350 mL/h, 400 mL/h, 450 mL/h, or 500 mL/h; a dropwise addition speed of the concentrated ammonia water is controlled to be in a range from 6 mL/h to 10 mL/h, for example, 6 mL/h, 7 mL/h, 8 mL/h, 9 mL/h, or 10 mL/h; and a dropwise addition speed of the sodium hydroxide solution is controlled such that the pH of the overall reaction solution is in a range from 10.00 to 13.00, for example 10.00, 10.50, 11.00, 11.50, 12.00, 12.50, or 13.00.

According to the method for preparing the high-voltage low-cobalt ternary cathode material of the present application, the base solution containing ammonia water used in step 2 is a base solution containing 0.1-0.8 M ammonia water, preferably a base solution containing 0.3-0.5 M ammonia water; the concentrated ammonia water used in step 2 is an ammonia water solution with a concentration of 20%-28%, preferably an ammonia water solution with a concentration of 25%; and the sodium hydroxide solution used in step 2 is a sodium hydroxide solution with a concentration of 30%-42%, for example, a sodium hydroxide solution with a concentration of 30-32%, or, a sodium hydroxide solution with a concentration of 40%-42%, preferably, a sodium hydroxide solution with a concentration of 32%.

According to the method for preparing the high-voltage low-cobalt ternary cathode material of the present application, wherein the particle size D₅₀ of particles of the reaction mixture obtained in step 2 has a target particle size ranging from 3 µm to 20 µm, preferably a target particle size ranging from 5 µm to 15 µm.

According to the method for preparing the high-voltage low-cobalt ternary cathode material of the present application, wherein the molar ratio of the nickel-cobalt-manganese hydroxide precursor to LiOH·H₂O or lithium carbonate in step 4 is in a range from 1:1.01 to 1:1.10, preferably in a range from 1:1.02 to 1:1.05, for example 1:1.02, 1:1.03, 1:1.04, or 1:1.05.

According to the method for preparing the high-voltage low-cobalt ternary cathode material of the present application, wherein the sintering temperature in step 5 is in a range from 700°C to 1000°C, for example, 700°C, 750°C, 800°C, 820°C, 850°C, 890°C, 900°C, 920°C, 940°C, 970°C, or 1000°C; the sintering time is in a range from 10 hours to 14 hours, preferably in a range from 11 hours to 13 hours.

According to the method for preparing the high-voltage low-cobalt ternary cathode material of the present application, wherein a doping treatment is carried out in step 4, and the doping treatment comprises adding one or more of compounds containing the elements Ca, Mg, Zr, Sr, Na, Si, Al, La, W, B, Fe, Cu, K, Ge, Nd, Nb, Mo, Y, or Ce in step 4.

According to the method for preparing the high-voltage low-cobalt ternary cathode material of the present application, wherein a coating treatment is carried out after step 5, and the coating treatment comprises, after step 5, adding one or more of the compounds containing the elements Ca, Mg, Zr, Sr, Na, Si, Al, La, W, B, Fe, Cu, K, Ge, Nd, Nb, Mo, Y, or Ce and sintering the mixture again.

Through the doping treatment and/or the coating treatment, the cathode material is made to maintain a more excellent layered structure during cycling, to provide better solvation effect for lithium ions, or to enhance the electronic conductivity and the ionic conductivity of the cathode material, so as to further contrapuntally improve its cycling performance, high-temperature performance and low-temperature performance, rate performance, storage performance, and other performances.

The above methods disclosed in the present application are only for illustrating the methods adopted for realizing the low-cobalt ternary cathode material described in the present application, and the low-cobalt ternary cathode material described in the present application should not be limited by the steps and parameters in the above methods.

It is a further object of the present application to provide a use of the above-described high-voltage low-cobalt ternary cathode material in the preparation of positive electrodes for lithium-ion batteries.

### Technical effect

The present application provides a high-voltage low-cobalt ternary cathode material having the general formula LiₐNi_{b}Co_{c}Mn_{d}O₂, wherein, 0.97 ≤ a ≤ 1.1, 0.5 ≤b ≤ 0.76, 0 ≤ c ≤ 0.1, 0.24 ≤ d ≤ 0.5, b+c+d=1 and c < 0.35d, and wherein the cathode material has a lithium-nickel disordering ratio (σ), 2 ≤ σ ≤ 7. Compared with prior art, the cathode material of the present application, compared with other ternary cathode materials with the same nickel content, can be used at a higher voltage, which improves the energy density while avoiding cracking and pulverization of the cathode material due to the smaller volume change of this cathode material, prolonging the service life of the material, and improving the safety performance of the material. In addition, due to the relatively lower nickel and cobalt content and relatively higher manganese content of the cathode material, the cathode material of the present application has more excellent cycling performance and high voltage performance, and at the same time, reduces its cost of use.

### DETAILED DESCRIPTION OF THE INVENTION

Hereinafter, the present application is further illustrated by means of examples, but the present application is not limited by the examples.

The information of main raw materials is as follows:
Nickel sulfate hexahydrate NiSO₄·6H₂O, 262.85 g/mol, battery grade, Jinchuan Group Co., Ltd.;
Cobalt sulfate heptahydrate CoSO₄·7H₂O, 281.15 g/mol, battery grade, Zhejiang Huayou Cobalt Co., Ltd.;
Manganese sulfate monohydrate MnSO_{b}·H₂O, 169.016 g/mol, battery grade, Guizhou Dalong Huicheng New Material Co., Ltd.;
Nickel-cobalt-manganese hydroxide precursor Ni_{b}Co_{c}Mn_{d}(OH)₂, self-made;
Lithium hydroxide monohydrate LiOH·H₂O, 41.96 g/mol, Shandong Ruifu Lithium Industry Co., Ltd.;
Lithium carbonate Li₂CO₃, 73.89 g/mol, Shandong Ruifu Lithium Industry Co., Ltd.;
Polyvinylidene fluoride (PVDF), analytically pure, Aladdin Holdings Group Co., Ltd.;
Nitromethylpyrrolidone (NMP), analytically pure, Aladdin Holdings Group Co., Ltd.;
Ammonia water (20%-28%), analytically pure, Aladdin Holdings Group Co., Ltd.;
Sodium hydroxide solution (32%), analytically pure, Aladdin Holdings Group Co., Ltd.

The information of main test equipments is as follows:
XRD: Malvern Panaco Aeris X-ray diffractometer
Electrochemical testing equipment: button cell testing system of Shenzhen Neware Technology Co., Ltd.;
Sintering equipment: Tube furnace of Hefei Kejing material technology Co., Ltd., model OTF-1500X.

The lithium-nickel disordering test method is as follows.

The cathode material powder was back-pressed into tablets, and the XRD measurement of the powder was carried out using a Malvern Panalytical Aeris-type XRD test instrument, with a 2θ test angle of 10°-80°, a step size of 2θ of 0.0108°, and a test time of 100 s for each step.

The XRD spectra obtained from the tests were subjected to XRD spectrum refinement using HighScore software, and the refinement steps comprised:
1. performing Default operation with automatic fitting twice for background correction;
2. performing CIF card loading and selecting the 96-400-2444 card;
3. converting the card to phase and performing auto-finishing twice;
4. entering the manual refinement mode and performing refinement operations on the background parameters, peak variables, preferred orientation, asymmetry types and spectrum variables in turn;
5. performing atomic temperature factor modification, wherein the factor of Li is set to 0.0527, that of Ni/Co/Mn is set to 0.01232, and that of O is set to 0.031663;
6. performing the valuation of atomic occupancy according to the elemental content of the example, firstly setting the initial lithium-nickel disordering ratio σ as 5, i.e., the lithium-nickel disordering ratio is defined as the ratio percentage of lithium content in the nickel layer to the total lithium content is 5%, e.g., for LiNi_{0.52}Co_{0.10}Mn_{0.38}O₂ of Example 1, the amount of Li1 ions (the amount of Li ions in its own position) is 0.95, the amount of Li2 ions (the amount of Li ions in Ni's position) is 0.05 (i.e., lithium-nickel disordering ratio σ), the amount of Ni1 ions (the amount of Ni ions in its own position) is 0.47, the amount of Ni2 ions (the amount of Ni ions in Li's position) is 0.05, the amount of Co ions is 0.1, the amount of Mn ions is 0.38, and the amount of O ions is 2; and
7. modifying the atomic occupancy constraint relationships, taking LiNi_{0.52}Co_{0.10}Mn_{0.38}O₂ of Example 1 as an example, the constraint relationships are set as: Li1+Ni2=1, Li2+Li1=1, Ni1+Li2=0.52, and then checking Li1/Li2/Ni1/Ni2 occupancy ratio and performing manual refinement;
continuously carrying out the refining operation until the Weighted R Profile (Rwp) value and Rexpected (Rp) value are both lower than 10 (the smaller values indicate that the measured and simulated spectra are closer to each other), and the Goodness of Fit (GOF) value is less than 1.5, which is considered to be the completion of the refining, and then the lithium-nickel disordering ratio σ of the material can be read out in the interface of the software.

The electrochemical performance test method is as follows.

The cathode material and lithium plate obtained in the example were used as cathode active material and anode active material respectively to assemble a button cell; the cathode slurry in the positive electrode plate was composed of the cathode active material, acetylene black (conductive agent), and PVDF (binder), and the mass ratio of the three was 80:12:8; the button cell testing system of Shenzhen Neware Technology Co., Ltd. was used for the test, and the charging and discharging voltages were set within the voltage ranges, such as 3.0-4.5 V The electrochemical performance of the button cell assembled with the cathode material was tested at room temperature, and the mass specific capacity of the cathode material was tested at a current density of 0.02 A/g (0.1C), and then its 100-cycle cycling performance was tested at a current density of 0.2 A/g (1C), and the capacity retention rate was calculated.

The DSC test method is as follows.

The fully charged battery was disassembled, and the cathode material soaked in electrolyte solution was scraped off from the positive electrode plate, placed in a DSC testing device (TOPEM TMDSC), and heated to 800°C at a heating rate of 10°C/min. The temperature-exothermic curve was obtained, and the exothermic temperature was recorded according to the peak position.

The test method of particle size D50 was as follows.

Material powder was taken and tested using a Malvern Mastersizer 3000 laser particle size analyzer with a wet sample injector to obtain particle size distribution data.

### Example 1

2.73 kg of NiSO₄·6H₂O, 1.284 kg of MnSO₄·H₂O, and 562 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

9 L of deionized water was added into a 10 L of reaction kettle, and about 200 mL of concentrated ammonia water was added into the water to formulate a base solution containing 0.3 M of ammonia water. A peristaltic pump was used to add the salt solution, a 32% of sodium hydroxide solution and a 25% of ammonia water solution into the reaction kettle dropwise simultaneously, in which the dropwise addition speed of the salt solution was controlled to be 400 mL/h, the dropwise addition speed of ammonia water was controlled to be 8 mL/h, and the dropwise addition speed of sodium hydroxide solution was controlled by an on-line pH meter, so that the pH of the overall reaction solution was 11.50. The reaction kettle was provided with an overflow port, and the overflow was maintained continuously as the solution was dropwise added until the particle size D50 of particles of the reaction mixture in the reaction kettle was 10 µm. After that, all the reaction mixture in the reaction kettle was taken out, and solid-liquid separation was carried out using a centrifuge. The obtained materials were washed with deionized water. The washed moist solid materials were transferred to an oven and dried at 120 °C for 10 h to obtain 885 g of Ni_{0.52}Co_{0.10}Mn_{0.38}(OH)₂.

100 g of Ni_{0.52}Co_{0.10}Mn_{0.38}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 920 °C for 12 hours under a pure oxygen atmosphere to obtain 102 g of the cathode material LiNi_{0.52}Co_{0.10}Mn_{0.38}O₂. Afterwards, the electrochemical specific capacity and cycling performance of this cathode material were tested, and the data was shown in Table 1.

### Example 2

3.15 kg of NiSO₄·6H₂O, 1,014 g of MnSO₄·H₂O, and 562 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 860 g of Ni_{0.6}Co_{0.1}Mn_{0.3}(OH)₂ with a particle size of 10 µm was synthesized.

100 g of Ni_{0.6}Co_{0.1}Mn_{0.3}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 890 °C for 12 hours under a pure oxygen atmosphere to obtain 102 g of the cathode material LiNi_{0.6}Co_{0.1}Mn_{0.3}O₂. Afterwards, the electrochemical specific capacity and cycling performance of this cathode material were tested, and the data was shown in Table 1.

### Example 3

3.15 kg of NiSO₄·6H₂O and 1,352 g of MnSO₄·H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 855 g of Ni_{0.6}Mn_{0.4}(OH)₂ with a particle size of 10 µm was synthesized.

100 g of Ni_{0.6}Mn_{0.4}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 890 °C for 12 hours under a pure oxygen atmosphere to obtain 102 g of the cathode material LiNi_{0.6}Mn_{0.4}O₂. Afterwards, the electrochemical specific capacity and cycling performance of this cathode material were tested, and the data was shown in Table 1.

### Example 4

3.668 kg of NiSO₄·6H₂O, 845 g of MnSO₄·H₂O, and 281 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 872 g of Ni_{0.70}Co_{0.05}Mn_{0.25}(OH)₂ with a particle size of 10 µm was synthesized.

100 g of Ni_{0.70}Co_{0.05}Mn_{0.25}(OH)₂ was mixed evenly with 46.80g of LiOH·H₂O at a molar ratio of 1:1.03 using a high-speed mixer to obtain a mixture, and the mixture was loaded into a sagger, placed into a tube furnace, and sintered at 820 °C for 12 hours under a pure oxygen atmosphere to obtain 102 g of the cathode material LiNi_{0.70}Co_{0.05}Mn_{0.25}O₂. Afterwards, the electrochemical specific capacity and cycling performance of this cathode material were tested, and the data was shown in Table 1.

### Example 5

3.15 kg of NiSO₄·6H₂O, 1,014 g of MnSO₄·H₂O, and 562 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 860 g of Ni_{0.6}Co_{0.1}Mn_{0.3}(OH)₂ with a particle size of 10 µm was synthesized.

100 g of Ni_{0.6}Co_{0.1}Mn_{0.3}(OH)₂ was mixed evenly with 40.9 g of lithium carbonate at a molar ratio of 1:1.03 using a high-speed mixer, and then 0.1 g of aluminum oxide and 0.3 g of zirconium oxide were added into the high-speed mixer and mixed evenly to obtain a mixture. Afterwards the mixture was loaded into a sagger, placed into a tube furnace, and sintered at 890 °C for 12 hours under a pure oxygen atmosphere to obtain 102 g of the cathode material LiNi_{0.6}Co_{0.1}Mn_{0.3}O₂ doped with trace amounts of aluminum and zirconium. Afterwards, the electrochemical specific capacity and cycling performance of this cathode material were tested, and the data was shown in Table 1.

### Example 6

3.15 kg of NiSO₄·6H₂O, 1,014 g of MnSO₄·H₂O, and 562 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 860 g of Ni_{0.6}Co_{0.1}Mn_{0.3}(OH)₂ with a particle size of 10 µm was synthesized.

100 g of Ni_{0.6}Co_{0.1}Mn_{0.3}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 890 °C for 12 hours under a pure oxygen atmosphere to obtain 102 g of the cathode material LiNi_{0.6}Co_{0.1}Mn_{0.3}O₂.

100g of the cathode electrode material was mixed with 0.3g of aluminum oxide in a high-speed mixer to obtain a mixture, and the mixture was loaded into a sagger, placed into a tube furnace, and sintered at 400°C for 12 hours under a pure oxygen atmosphere to obtain 100g of cathode material LiNi_{0.6}Co_{0.1}Mn_{0.3}O₂ with aluminum coated on its surface. Afterwards, the electrochemical specific capacity and cycling performance of this cathode material were tested, and the data was shown in Table 1.

### Comparative Example 1

2.625 kg of NiSO₄·6H₂O, 1.014 kg of MnSO₄·H₂O, and 1.124 kg of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 880 g of Ni_{0.5}Co_{0.2}Mn_{0.3}(OH)₂ with a particle size of 10 µm was synthesized.

100 g of Ni_{0.5}Co_{0.2}Mn_{0.3}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 920 °C for 12 hours under a oxygen atmosphere to obtain 102 g of the cathode material LiNi_{0.5}Co_{0.2}Mn_{0.3}O₂. Afterwards, the electrochemical specific capacity and cycling performance of this cathode material were tested, and the data was shown in Table 1.

### Comparative Example 2

3.15 kg of NiSO₄·6H₂O, 676 g of MnSO₄·H₂O, and 1,124 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 866 g of Ni_{0.6}Co_{0.2}Mn_{0.2}(OH)₂ with a particle size of 10 µm was synthesized.

100 g of Ni_{0.6}Co_{0.2}Mn_{0.2}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 890 °C for 12 hours under a pure oxygen atmosphere to obtain 100 g of the cathode material LiNi_{0.6}Co_{0.2}Mn_{0.2}O₂. Afterwards, the electrochemical specific capacity and cycling performance of this cathode material were tested, and the data was shown in Table 1.

### Comparative Example 3

3.15 kg of NiSO₄·6H₂O and 1,352 g of MnSO₄·H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 891 g of Ni_{0.6}Mn_{0.4}(OH)₂ with a particle size of 10 µm was synthesized.

100 g of Ni_{0.6}Mn_{0.4}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 940 °C for 12 hours under a pure oxygen atmosphere to obtain 101 g of the cathode material LiNi_{0.6}Mn_{0.4}O₂. Afterwards, the electrochemical specific capacity and cycling performance of this cathode material were tested, and the data was shown in Table 1.

### Comparative Example 4

3.93 kg of NiSO₄·6H₂O, 507 g of MnSO₄·H₂O, and 562 g of CoSO₄·7H₂O were weighed and dissolved in 6 L of deionized water to obtain a salt solution, which was then diluted to a constant-volume of 10 L. A 32% of sodium hydroxide solution and a 25% of ammonia water solution were prepared for later use.

Using the same method as that in Example 1, 876 g of Ni_{0.75}Co_{0.1}Mn_{0.15}(OH)₂ with a particle size of 10 µm was synthesized.

100 g of Ni_{0.75}Co_{0.1}Mn_{0.15}(OH)₂ was mixed evenly with 46.80 g of LiOH·H₂O at a molar ratio of 1:1.03 using a high-speed mixer to obtain a mixture, and the mixture was loaded into a sagger, placed into a tube furnace, and sintered at 820 °C for 12 hours under a pure oxygen atmosphere to obtain 102 g of the cathode material LiNi_{0.75}Co_{0.1}Mn_{0.15}O₂. Afterwards, the electrochemical specific capacity and cycling performance of this cathode material were tested, and the data was shown in Table 1.

### Comparative Example 5

4.2 kg of NiSO₄·6H₂O, 338 g of MnSO₄·H₂O, and 562 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use. Using the same method as that in Example 1, 894 g of Ni_{0.8}Co_{0.1}Mn_{0.1}(OH)₂ with a particle size of 10 µm was synthesized.

100 g of Ni_{0.8}Co_{0.1}Mn_{0.1}(OH)₂ was mixed evenly with 46.80 g of LiOH·H₂O at a molar ratio of 1:1.03 using a high-speed mixer to obtain a mixture, and the mixture was loaded into a sagger, placed into a tube furnace, and sintered at 800 °C for 12 hours under a pure oxygen atmosphere to obtain 101 g of the cathode material LiNi_{0.8}Co_{0.1}Mn_{0.1}O₂. Afterwards, the electrochemical specific capacity and cycling performance of this cathode material were tested, and the data was shown in Table 1.

### Comparative Example 6

4.2 kg of NiSO₄·6H₂O, 507 g of MnSO₄·H₂O, and 281 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 857 g of Ni_{0.8}Co_{0.05}Mn_{0.15}(OH)₂ with a particle size of 10 µm was synthesized.

100 g of Ni_{0.8}Co_{0.05}Mn_{0.15}(OH)₂ was mixed evenly with 46.80 g of LiOH·H₂O at a molar ratio of 1:1.03 using a high-speed mixer to obtain a mixture, and the mixture was loaded into a sagger, placed into a tube furnace, and sintered at 800 °C for 12 hours under a pure oxygen atmosphere to obtain 101 g of the cathode material LiNi_{0.8}Co_{0.05}Mn_{0.15}O₂. Afterwards, the electrochemical specific capacity and cycling performance of this cathode material were tested, and the data was shown in Table 1.

### Comparative Example 7

2.1 kg of NiSO₄·6H₂O, 1.521 kg of MnSO₄·H₂O, and 843 g of CoSO₄·7H₂O were weighed and dissolved in 6 L of deionized water to obtain a salt solution, which is then diluted to a constant-volume of 10 L. A 32% of sodium hydroxide solution and a 25% of ammonia water solution were prepared for later use.

Using the same method as that in Example 1, 823 g of Ni_{0.4}Co_{0.15}Mn_{0.45}(OH)₂ with a particle size of 10 µm was synthesized.

100 g of Ni_{0.4}Co_{0.15}Mn_{0.45}(OH)₂ was mixed evenly with 40.9 g of lithium carbonate at a molar ratio of 1:1.03 using a high-speed mixer to obtain a mixture, and the mixture was loaded into a sagger, placed into a tube furnace, and sintered at 800 °C for 12 hours under a pure oxygen atmosphere to obtain 102 g of the cathode material LiNi_{0.4}Co_{0.15}Mn_{0.45}O₂. Afterwards, the electrochemical specific capacity and cycling performance of this cathode material were tested, and the data was shown in Table 1.

### Test example: Electrochemical performance test

Tests were conducted in accordance with the electrochemical performance test method, the lithium-nickel disordering test method and the DSC test method as described above, and the test results were shown in Table 1.

**Table 1**

| | Lithium-nickel disordering ratio (%) | 0.1C capacity (mAh/g) 3-4.3V | 0.1C capacity (mAh/g) 3-4.5V | 1C 100-cycle capacity retention rate at an operating voltage range of 3-4.3V (%) | 1C 100-cycle capacity retention rate at an operating voltage range of 3-4.5V (%) | DSC exothermic temperature (°C) |
|---|---|---|---|---|---|---|
| Example 1 | 3.79 | 165 | 188 | 99.2 | 93.3 | 311 |
| Example 2 | 3.25 | 170 | 195 | 99.1 | 92.9 | 305 |
| Example 3 | 5.70 | 161 | 189 | 98.8 | 91.7 | 312 |
| Example 4 | 3.89 | 182 | 208 | 97.9 | 89.9 | 275 |
| Example 5 | 3.67 | 169 | 191 | 99.5 | 93.4 | 308 |
| Example 6 | 3.38 | 171 | 196 | 99.5 | 93.8 | 319 |
| Comparative Example 1 | 1.64 | 163 | 186 | 94.3 | 88.6 | 295 |
| Comparative Example 2 | 1.87 | 168 | 194 | 94.8 | 88.2 | 292 |
| Comparative Example 3 | 8.14 | 156 | 175 | 93.9 | 85.1 | 307 |
| Comparative Example 4 | 1.97 | 187 | 210 | 93.8 | 84.3 | 264 |
| Comparative Example 5 | 2.92 | 193 | 219 | 90.8 | 76.2 | 223 |
| Comparative Example 6 | 5.07 | 192 | 216 | 90.9 | 79.1 | 226 |
| Comparative Example 7 | 10.33 | 143 | 164 | 87.0 | 69.4 | 334 |

It can be seen from Table 1:
Comparing Example 1 with Comparative Example 1, as the lithium-nickel disordering ratio of Comparative Example 1 is too low, its capacity retention rate is relatively low, and the DSC exothermic onset temperature is relatively low, indicating that a suitable lithium-nickel disordering ratio can help to maintain the stability of the structure.
Comparing Example 2 with Comparative Example 2, as the lithium-nickel disordering ratio of Comparative Example 2 is too low, its capacity retention rate is relatively low, and the DSC exothermic onset temperature is relatively low, indicating that a suitable lithium-nickel disordering ratio can help to maintain the stability of the structure.
Comparing Example 3 with Comparative Example 3, the capacity retention rate of Comparative Example 3 is relatively low and the capacity is too low, as the lithium- nickel disordering ratio of Comparative Example 3 is too high.
Comparing Example 4 with Comparative Example 4, due to the lithium-nickel disordering ratio of Comparative Example 4 being too low, its capacity retention rate is relatively low and the DSC exothermic onset temperature is relatively low, indicating that a suitable lithium-nickel disordering ratio can help to maintain the stability of the structure.

The capacity retention rates of both Comparative Example 5 and Comparative Example 6 were relatively low due to too high nickel content and too high capacity, even though the lithium-nickel disordering ratio is within the appropriate range.

Comparative Example 7 has a too low nickel content and a too high lithium-nickel disordering ratio, thus it has a too low capacity and a low capacity retention rate, despite the exothermic onset temperature being improved.

In summary, the present application provides a high-voltage low-cobalt ternary cathode material having the general formula LiₐNi_{b}Co_{c}Mn_{d}O₂, wherein, 0.97 ≤ a ≤ 1.1, 0.5 ≤ b ≤ 0.76, 0 ≤ c ≤ 0.1, 0.24 ≤ d ≤ 0.5, b + c + d = 1 and c < 0.35d, and wherein the cathode material has a lithium-nickel disordering ratio (σ): 2 ≤ σ ≤ 7. The high-voltage low-cobalt ternary cathode material provided by the present application can be used at an operating voltage of greater than or equal to 4.3 V, and can even be used at an operating voltage of up to 4.5 V While improving the energy density, cracking and pulverization of the cathode material is avoided due to the smaller volume change of the cathode material, which prolongs the service life of the material which is manifested by better capacity retention rate during cycling, and improves the safety performance of the material which is manifested by the higher exothermic temperature in the DSC test. In addition, due to the relatively lower nickel and cobalt contents and relatively higher manganese content of the cathode material, the cost of the cathode material is reduced while the cathode material has more excellent cycling performance and high voltage performance.

## Claims

1. A high-voltage low-cobalt ternary cathode material, wherein the high-voltage low-cobalt ternary cathode material has a general formula LiₐNi_{b}Co_{c}Mn_{d}O₂, wherein 0.97 ≤ a ≤ 1.1, 0.5 ≤ b ≤ 0.76, 0 ≤ c ≤ 0.1, 0.24 ≤ d ≤ 0.5, b+c+d=1, and c < 0.35d.

2. The high-voltage low-cobalt ternary cathode material of claim 1, wherein the high-voltage low-cobalt ternary cathode material has a lithium-nickel disordering ratio (σ), 2≤σ≤7.

3. The high-voltage low-cobalt ternary cathode material of claim 1 or 2, wherein in terms of capacity, the high-voltage low-cobalt ternary cathode material has a 0.1 C capacity of no more than 185 mAh/g at an operating voltage ranging from 3V to 4.3 V, and a 0.1 C capacity of no more than 210 mAh/g at an operating voltage ranging from 3 V to 4.5 V

4. The high-voltage low-cobalt ternary cathode material of any one of claims 1 to 3, wherein the high-voltage low-cobalt ternary cathode material is used at an operating voltage greater than or equal to 4.3 V, preferably at an operating voltage greater than or equal to 4.35 V, and more preferably at an operating voltage greater than or equal to 4.40 V

5. A method for preparing the high-voltage low-cobalt ternary cathode material of any one of claims 1-4, comprising the following steps:
step 1: dissolving NiSO₄·6H₂O, MnSO₄·H₂O and CoSO₄·7H₂O in deionized water to obtain a salt solution;
step 2: adding deionized water into a reaction vessel, and adding a concentrated ammonia water into the deionized water to formulate a base solution containing ammonia water; adding the salt solution obtained in step 1, as well as a sodium hydroxide solution and the concentrated ammonia water into the base solution dropwise at the same time, respectively; wherein the reaction vessel is provided with an overflow port, and with the dropwise addition of the salt solution, the sodium hydroxide solution, and the concentrated ammonia water, an overflow is maintained continuously until a particle size D₅₀ of particles of the reaction mixture in the reaction vessel reaches a target particle size;
step 3: removing all the reaction mixture in the reaction vessel obtained in step 2, carrying out solid-liquid separation, washing with deionized water, and drying to obtain a nickel-cobalt-manganese hydroxide precursor;
step 4: mixing the nickel-cobalt-manganese hydroxide precursor with LiOH·H₂O or lithium carbonate evenly to obtain a mixture; and
step 5: sintering the mixture obtained in step 4 under an oxygen atmosphere to obtain the high-voltage low-cobalt ternary cathode material.

6. The method for preparing the high-voltage low-cobalt ternary cathode material of claim 5, wherein in step 2, a dropwise addition speed of the salt solution is controlled to be in a range from 300 mL/h to 500 mL/h; a dropwise addition speed of the concentrated ammonia water is controlled to be in a range from 6 mL/h to 10 mL/h; and a dropwise addition speed of the sodium hydroxide solution is controlled such that the pH of the overall reaction solution is in a range from 10.00 to 13.00.

7. The method for preparing the high-voltage low-cobalt ternary cathode material of claim 5 or 6, wherein the base solution containing ammonia water used in step 2 is a base solution containing 0.1-0.8 M ammonia water, preferably a base solution containing 0.3-0.5 M ammonia water; the concentrated ammonia water used in step 2 is an ammonia water solution with a concentration of 20%-28%, preferably an ammonia water solution with a concentration of 25%; and the sodium hydroxide solution used in step 2 is a sodium hydroxide solution with a concentration of 30%-42%, preferably a sodium hydroxide solution with a concentration of 32%.

8. The method for preparing the high-voltage low-cobalt ternary cathode material of any one of claims 5 to 7, wherein the particle size D₅₀ of particles of the reaction mixture obtained in step 2 has a target particle size ranging from 3 µm to 20 µm.

9. The method for preparing the high-voltage low-cobalt ternary cathode material of any one of claims 5 to 8, wherein the molar ratio of the nickel-cobalt-manganese hydroxide precursor to LiOH·H₂O or lithium carbonate in step 4 is in a range from 1:1.01 to 1:1.10, preferably in a range from 1:1.02 to 1:1.05.

10. The method for preparing the high-voltage low-cobalt ternary cathode material of any one of claims 5 to 9, wherein the sintering in step 5 is carried out at a temperature ranging from 700 °C to 1000 °C for a time period ranging from 10 hours to 14 hours.

11. The method for preparing the high-voltage low-cobalt ternary cathode material of any one of claims 5 to 10, wherein a doping treatment is carried out in step 4, and the doping treatment comprises adding one or more of compounds containing the elements Ca, Mg, Zr, Sr, Na, Si, Al, La, W, B, Fe, Cu, K, Ge, Nd, Nb, Mo, Y, or Ce in step 4.

12. The method for preparing the high-voltage low-cobalt ternary cathode material of any one of claims 5 to 11, wherein a coating treatment is carried out after step 5, and the coating treatment comprises, after step 5, adding one or more of the compounds containing the elements Ca, Mg, Zr, Sr, Na, Si, Al, La, W, B, Fe, Cu, K, Ge, Nd, Nb, Mo, Y, or Ce and sintering the mixture again.

13. Use of the high-voltage low-cobalt ternary cathode material of any one of claims 1 to 4 in the preparation of positive electrodes for lithium ion batteries.
